# EUROPÄISCHE PATENTSCHRIFT

(11) **EP 3 966 072 B1**
(45) Veröffentlichungstag und Bekanntmachung des Hinweises auf die Patenterteilung: **15.11.2023**
(21) Anmeldenummer: 20727930.8
(22) Anmeldetag: 08.05.2020
(51) Int. Cl.: B60N 2/225, B60N 2/235

(54) **BESCHLAG FÜR EINEN FAHRZEUGSITZ**
FITTING FOR VEHICLE SEAT
FERRURE POUR UN SIÈGE DE VÉHICULE

(30) Priorität: 10.05.2019 DE 102019112345; 31.10.2019 DE 102019129528
(43) Veröffentlichungstag der Anmeldung: 16.03.2022
(73) Patentinhaber: Adient US LLC, Plymouth, MI 48170 (US)
(72) Erfinder: SCHOLZ, Grit, 42897 Remscheid (DE); ALBERT REGINOLD, Kirubaharan, 51399 Burscheid (DE); HENKEL, Dieter, 42897 Remscheid (DE); HUEBNER, Daniel, 51371 Leverkusen (DE); PARAMASIVAM, Balaji, 51379 Leverkusen (DE); ROCK, Arkadius, 42719 Solingen (DE); SCHUELER, Rolf, 42579 Heiligenhaus (DE); YASEN, Mothanna, 42929 Wermelskirchen (DE)
(74) Vertreter: Kutzenberger Wolff & Partner
(86) Internationale Anmeldenummer: PCT/EP2020/062898
(87) Internationale Veröffentlichungsnummer: WO 2020/229354

(56) Entgegenhaltungen:
- DE-A1-102004 050 152
- DE-C1- 3 129 672

## Beschreibung

Die Erfindung betrifft einen Gelenkbeschlag für einen Fahrzeugsitz, insbesondere Kraftfahrzeugsitz, aufweisend ein erstes Beschlagteil mit einem ersten Zahnkranz, ein zweites Beschlagteil mit einem zweiten Zahnkranz, das zweite Beschlagteil um eine Drehachse relativ zu dem ersten Zahnkranz drehbar, ein in dem ersten Zahnkranz und in dem zweiten Zahnkranz abwälzendes Zahnrad zur Erzeugung einer Drehbewegung zwischen dem ersten Zahnkranz und dem zweiten Zahnkranz, einen zwischen dem ersten Beschlagteil und dem Zahnrad angeordneten Exzenter zum Antreiben einer Abwälzbewegung des Zahnrads in dem ersten Zahnkranz, der Exzenter aufweisend zwei Keilsegmente und eine die Keilsegmente auseinanderdrückende Feder. Die Erfindung betrifft zudem einen Fahrzeugsitz.

### Stand der Technik

Die DE 30 13 304 A1 offenbart eine Stellvorrichtung für Sitze und Fenster insbesondere von Kraftfahrzeugen, mit Gelenkhebeln, die über eine Schwenkachse miteinander verbunden sind, wobei dem einen Gelenkhebel ein Innenzahnrad und dem anderen Gelenkhebel ein in dieses eingreifendes Stirnrad zugeordnet ist, dessen Kopfkreis wenigstens um eine Zahnhöhe kleiner als der Fußkreis des Innenzahnrades ist und einer der beiden Gelenkhebel auf einem mit der antreibbaren Schwenkachse drehmomentübertragend verbundenen Exzenter gelagert ist. Der Exzenter besteht aus einer auf der Schwenkachse drehfest angeordneten Mitnehmerscheibe und aus zwei gegeneinander geneigten, die Mitnehmerscheibe am Umfang bereichsweise umfassenden Keilsegmenten, zwischen denen ein die Keilsegmente auseinanderdrückender Kraftspeicher angeordnet ist.

Die DE 44 36 101 A1 offenbart einen Gelenkbeschlag für Sitze mit verstellbarer Rückenlehne, insbesondere Kraftfahrzeugsitze, bei denen ein dem Sitzteil zugeordneter, fester Gelenkteil und ein der Lehne zugeordneter, schwenkbarer Gelenkteil über eine Schwenkachse miteinander verbunden sind, wobei eine die Lage beider Gelenkteile zueinander bestimmende, als Getriebe ausgebildete Ver- und Feststelleinrichtung vorgesehen ist, und die Schwenkachse zur Lagerung des einen Gelenkteiles einen Exzenterabschnitt aufweist, der aus zwei einen Mitnehmer der Schwenkachse bereichsweise umfassenden, gegeneinander geneigten Keilsegmenten, einem zwischen deren Schmalseiten fassenden Mitnehmerarm, und einem die Breitseiten der Keilsegmente auseinanderdrückenden Kraftspeicher gebildet ist, wobei die Schwenkachse eines jeden Gelenkbeschlages eine zentrale Aufnahme zur drehfesten Verbindung mit einer die beiden Gelenkbeschläge eines Sitzes miteinander kuppelnden Übertragungsstange aufweist. Der Mitnehmer ist als Buchse ausgebildet ist, die mit dem in den Mitnehmer integrierten Mitnehmerarm einstückig verbunden ist und mit einer den Gelenkbereich außenseitig übergreifenden Abdeckscheibe verbunden ist. Die Buchse weist in ihrem Zentrum die drehmomentübertragende Aufnahme für eine Übertragungsstange auf.

Die DE 10 2005 031 263 A1 offenbart einen Gelenkbeschlag für einen verstellbaren Fahrzeugsitz, insbesondere Gelenkbeschlag für eine Rückenlehne eines Kraftfahrzeugsitzes, mit einem ersten Zahnkranz, mit einem zweiten Zahnkranz, wobei beide Zahnkränze um eine Achse gegeneinander drehbar sind und um diese Achse zentriert sind, und mit einer Treibeinheit aufweisend eine Welle für das Einleiten einer Verstellbewegung, wobei die Welle zentrisch zur Achse ist, eine zentrische, kreisförmige Ausnehmung, welche um ein Exzentrizitätsmaß gegenüber der Achse versetzt ist, ein Treibteil, das sich in der Ausnehmung befindet, an dieser Ausnehmung anliegt und mit der Welle drehverbunden ist, und eine Ausgleichseinheit, welche ein mit der Welle verbundenes Keilstück, eine mit diesem Keilstück zusammenwirkende Gegenfläche, die am Treibteil ausgebildet ist, und ein elastisches Mittel aufweist, das das Treibteil so vorbelastet, dass das Treibteil zum höchsten Punkt des Keilstücks hingedrückt wird.

Eine Entwicklung autonom fahrender Fahrzeuge erfordert einen erweiterten Einstellbereich des von einem das Fahrzeug steuernden Insassen genutzten Fahrzeugsitzes, um den Komfort für einen nicht mehr ständig lenkenden Fahrer erhöhen zu können. Dies bedeutet bei gleichzeitig beizubehaltender Insassensicherheit im Falle eines Unfalls, dass ein Sicherheitsgurt komplett mit dem Sitz verfahren werden muss, um auch bei einem weit hinten angeordneten Fahrzeugsitz bzw. einer flach eingestellten Rückenlehne nah an dem Insassen anzuliegen. Derartige Gurtsysteme, deren Schultergurt somit nicht mehr karosseriefest an der B-Säule befestigt ist, sondern im oberen Bereich der Rückenlehne, führen zu signifikant höheren Lasten im Einstellbeschlag und erfordern folglich bei gleichem mechanischen Grundprinzip mehr Bauraum und mehr Gewicht als bei aus dem Stand der Technik bekannte Einstellbeschlägen.

DE 10 2004 050 152 A1 beschreibt einen Getriebebeschlag für einen Fahrzeugsitz, insbesondere für einen Kraftfahrzeugsitz, mit einem ersten Hohlrad, einem um eine Drehachse drehbaren Exzenter, einem vom Exzenter angetriebenen, das erste Hohlrad kämmenden Ritzel und einem vom Ritzel gekämmten zweiten Hohlrad, welches am ersten Hohlrad gelagert ist. Bezüglich der Drehachse ist axial versetzt zum Exzenter wenigstens ein Keilsystem vorgesehen, welches zum Spielausgleich zwischen dem einen der Hohlräder und dem anderen Hohlrad und/oder dem Ritzel wirkt.

### Aufgabe

Der Erfindung liegt die Aufgabe zu Grunde, einen Gelenkbeschlag der eingangs genannten Art zu verbessern, insbesondere ein Spiel in dem Gelenkbeschlag zu reduzieren, sowie einen entsprechenden Fahrzeugsitz bereitzustellen.

### Lösung

Diese Aufgabe wird gelöst durch einen Gelenkbeschlag für einen Fahrzeugsitz, insbesondere Kraftfahrzeugsitz, aufweisend ein erstes Beschlagteil mit einem ersten Zahnkranz, ein zweites Beschlagteil mit einem zweiten Zahnkranz, das zweite Beschlagteil um eine Drehachse relativ zu dem ersten Zahnkranz drehbar, ein in dem ersten Zahnkranz und in dem zweiten Zahnkranz abwälzendes Zahnrad zur Erzeugung einer Drehbewegung zwischen dem ersten Zahnkranz und dem zweiten Zahnkranz, einen zwischen dem ersten Beschlagteil und dem Zahnrad angeordneten Exzenter zum Antreiben einer Abwälzbewegung des Zahnrads in dem ersten Zahnkranz, der Exzenter aufweisend zwei Keilsegmente und eine die Keilsegmente auseinanderdrückende Feder, wobei zwischen dem zweiten Beschlagteil und dem Zahnrad ein weiterer Exzenter, insbesondere zur Spielfreistellung zwischen dem Zahnrad und dem zweiten Zahnkranz, angeordnet ist, der weitere Exzenter aufweisend zwei Keilsegmente.

Dadurch, dass zwischen dem zweiten Beschlagteil und dem Zahnrad ein weiterer Exzenter, insbesondere zur Spielfreistellung zwischen dem Zahnrad und dem zweiten Zahnkranz, angeordnet ist, wobei der weitere Exzenter zwei Keilsegmente aufweist, ist ein Gelenkbeschlag mit einem reduzierten Spiel zur Verfügung gestellt.

Die beiden Zahnkränze können zueinander unterschiedliche Zähnezahlen aufweisen. Durch Wahl der Zähnezahldifferenz lässt sich das Untersetzungsverhältnis zwischen den beiden Beschlagteilen bzw. zwischen einerseits dem Zahnrad und andererseits den Beschlagteilen konstruktiv einstellen. Der Unterschied der Zähnezahlen zwischen den beiden Zahnkränzen kann genau eins betragen. Vorzugsweise weist der erste Zahnkranz 50 Zähne und weist der zweite Zahnkranz 51 Zähne auf. Der Unterschied der Zähnezahlen zwischen den beiden Zahnkränzen kann größer als eins sein.

Das Zahnrad hat vorzugsweise eine geringere Zähnezahl als jeder der beiden Zahnkränze. Der Unterschied zwischen der Zähnezahl des Zahnrads und der Zähnezahl eines der beiden Zahnkränze kann genau eins betragen. Vorzugsweise weist das Zahnrad 49 Zähne auf. Der Unterschied der Zähnezahlen zwischen dem Zahnrad und den beiden Zahnkränzen kann jedoch auch jeweils größer als eins sein.

Das Zahnrad kann mit einer für beide Zahnkränze gemeinsamen Verzahnung ausgerüstet sein, die für beide Zahnkränze gleich ist. Alternativ kann das Zahnrad aus zwei unterschiedlichen, fest miteinander verbundenen Zahnrädern unterschiedlicher Zähnezahl aufgebaut sein, wobei das eine Zahnrad mit dem ersten Zahnkranz in Zahneingriff ist und das andere Zahnrad mit dem zweiten Zahnkranz in Zahneingriff ist.

Vorzugsweise weisen beide Exzenter eine gleich orientierte Exzentrizität zur Drehachse auf. Das bedeutet, die beiden Exzenter sind nicht zueinander verdreht angeordnet. Jeweils zwei Keilsegmente können axial benachbart zueinander angeordnet sein. Die beiden Exzenter können axial benachbart zueinander angeordnet sein. Die Keilsegmente der beiden Exzenter können Gleichteile sein.

Jeweils zwei Keilsegmente können spiegelsymmetrisch zu einer senkrecht zur Drehachse verlaufenden Symmetrieebene angeordnet sein. Die beiden Exzenter können spiegelsymmetrisch zu einer senkrecht zur Drehachse verlaufenden Symmetrieebene angeordnet sein.

Der Exzenter kann eine dessen Keilsegmente auseinanderdrückende Feder aufweisen. Dadurch, dass die Feder die Keilsegmente auseinander drückt, ist das Zahnrad in radialer Richtung spielfrei im Zahneingriff mit dem ersten Zahnkranz. Auch der weitere Exzenter kann eine dessen Keilsegmente auseinanderdrückende Feder aufweisen. Dadurch, dass die Feder die Keilsegmente auseinander drückt, ist das Zahnrad in radialer Richtung auch spielfrei im Zahneingriff mit dem zweiten Zahnkranz.

Der weitere Exzenter kann einen dessen Keilsegmente antreibenden Mitnehmer aufweisen. Ein Mitnehmerarm des Mitnehmers kann zwischen die Keilsegmente des Exzenters greifen, so dass durch Drehung des Mitnehmers die Keilsegmente gedreht werden und dadurch das Zahnrad antreiben.

Die beiden Beschlagteile können mittels eines Umklammerungsrings axial zueinander fixiert sein. Die beiden Beschlagteile sind dann jedoch in radialer Richtung begrenzt zueinander beweglich, damit ein Radialspielausgleich durch die Exzenter erfolgen kann.

Wenigstens einer der Exzenter kann zur Reduzierung von Reibung in einer Gleitlagerbuchse gelagert sein. Die Gleitlagerbuchse kann in einem der beiden Beschlagteile angeordnet sein, insbesondere eingepresst sein. Vorzugsweise ist jeder der beiden Exzenter in jeweils einer Gleitlagerbuchse gelagert. Durch eine Lagerung der Keilsegmente in Gleitlagern ist die Lastaufnahmefähigkeit verbessert und der Verschleiß bei Schnelllauf reduziert.

Erfindungsgemäß erfolgt durch eine in radialer Richtung elastisch vorgespannte Scheibe eine zusätzliche Spielfreistellung zwischen dem Zahnrad und einem der beiden Zahnkränze. Die Scheibe kann radial innen einen nachgiebigeren Werkstoff aufweist als radial außen. Ein radial äußerer Bereich der Scheibe kann aus einem Metall, insbesondere aus Stahl gefertigt sein. Ein radial äußerer Bereich der Scheibe kann einen geringfügig größeren Kopfkreisradius haben als das Zahnrad. Ein radial innerer Bereich der Scheibe kann aus einem Kunststoff oder Gummi gefertigt sein.

Die Scheibe kann radial außen eine Verzahnung aufweisen. Die Zähnezahl der Verzahnung der Scheibe kann gleich der Zähnezahl des Zahnkranzes sein, mit dem die Scheibe in Zahneigriff ist. Die Verzahnung der Scheibe kann im Zahneingriff mit dem ersten Zahnkranz sein. Alternativ kann die Verzahnung der Scheibe im Zahneingriff mit dem zweiten Zahnkranz sein. Ein radial innerer Bereich der Scheibe kann auf einer Stufe des Zahnrads abgestützt sein. Die Stufe kann umlaufend sein.

Die Aufgabe wird zudem gelöst durch einen Fahrzeugsitz mit wenigstens einem erfindungsgemäßen Gelenkbeschlag. Vorzugsweise weist der Fahrzeugsitz ein Sitzteil und eine Rückenlehne auf, die mittels des wenigstens einen Gelenkbeschlags um eine Drehachse einstellbar an dem Sitzteil angelenkt ist. Durch Verwendung des erfindungsgemäßen Gelenkbeschlag ist ein Spiel an einer Oberkante der Rückenlehne reduziert.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Ansicht eines erfindungsgemäßen Fahrzeugsitzes mit einem erfindungsgemäßen Gelenkbeschlag,
- Fig. 2:: eine Explosionsdarstellung eines erfindungsgemäßen Gelenkbeschlags gemäß eines ersten Ausführungsbeispiels,
- Fig. 3:: eine Getriebeprinzip-Darstellung des Gelenkbeschlags aus Fig. 2,
- Fig. 4:: eine perspektivische Ansicht des Gelenkbeschlags aus Fig. 2,
- Fig. 5:: eine Seitenansicht des Gelenkbeschlags aus Fig. 2, wobei ein Mitnehmer zur Sichtbarmachung von Keilsegmenten eines Exzenters des Gelenkbeschlags nicht dargestellt ist,
- Fig. 6:: einen Schnitt durch den Gelenkbeschlag aus Fig. 2,
- Fig. 7:: eine Vorderansicht des Gelenkbeschlags aus Fig. 2, und
- Fig. 8:: einen Schnitt durch einen Gelenkbeschlag gemäß eines zweiten Ausführungsbeispiels.

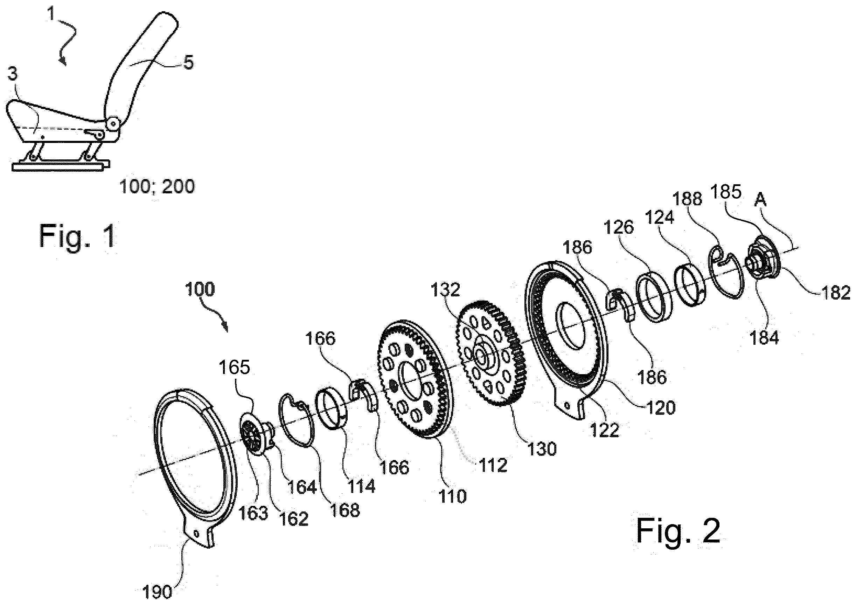

Figur 1 zeigt einen erfindungsgemäßen Fahrzeugsitz 1 für ein Kraftfahrzeug. Der Fahrzeugsitz 1 weist ein Sitzteil 3 und eine relativ zum Sitzteil 3 in ihrer Neigung einstellbare Rückenlehne 5 auf. Zur Neigungseinstellung der Rückenlehne 5 wird eine Übertragungstange gedreht, beispielsweise manuell mittels eines Handrades oder motorisch, beispielsweise mittels eines Elektromotors. Die Übertragungstange ist horizontal im Übergangsbereich zwischen dem Sitzteil 3 und der Rückenlehne 5 angeordnet. Auf beiden Seiten des Fahrzeugsitzes 1 greift die Übertragungstange drehfest in jeweils einen erfindungsgemäßen Gelenkbeschlag 100; 200.

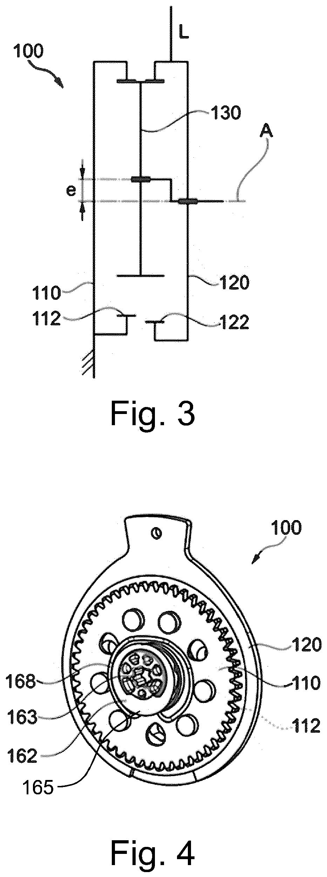

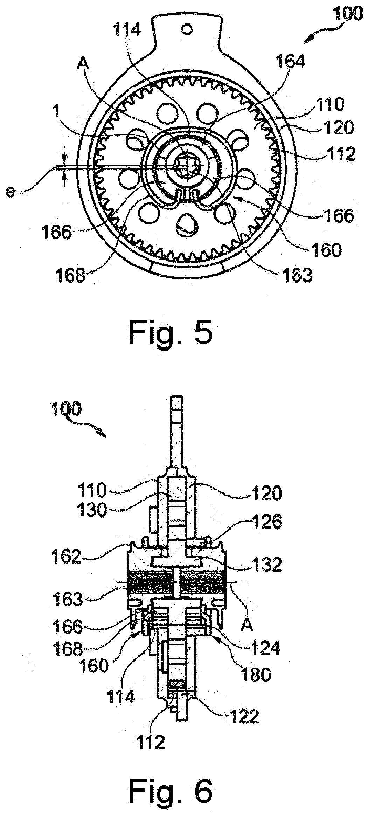

Die Figuren 2 bis 7 zeigen ein erstes Ausführungsbeispiel eines erfindungsgemäßen Gelenkbeschlags 100. Der Gelenkbeschlag 100 weist ein erstes Beschlagteil 110 und ein zweites Beschlagteil 120 auf. Das zweite Beschlagteil 120 ist um eine Drehachse A relativ zu dem erstes Beschlagteil 110 drehbar. Die nachfolgend verwendeten Richtungsangaben wie zentral, axial, radial und Umfangsrichtung beziehen sich auf die Drehachse A.

Eines der beiden Beschlagteile 110; 120 ist beispielsweise fest mit dem Sitzteil 3 und das andere der beiden Beschlagteile 110; 120 fest mit der Rückenlehne 5 verbindbar.

Das erste Beschlagteil 110 weist einen ersten Zahnkranz 112 auf. Das erste Beschlagteil 110 ist vorzugsweise als ein Hohlrad ausgebildet. Die Drehachse A fällt mit einer zentralen Achse des ersten Zahnkranzes 112 zusammen. An dem ersten Beschlagteil 110 ist zentral eine Gleitlagerbuchse 114 befestigt, die vorzugsweise in eine zentrale Öffnung des ersten Beschlagteils 110 eingepresst ist.

Das zweite Beschlagteil 120 weist einen zweiten Zahnkranz 122 auf. Das zweite Beschlagteil 120 ist vorzugsweise als ein Hohlrad ausgebildet. Die Drehachse A fällt mit einer zentralen Achse des zweiten Zahnkranzes 122 zusammen. An dem zweiten Beschlagteil 120 ist zentral eine Buchse 126 befestigt, in der eine Gleitlagerbuchse 124 angeordnet ist. Vorzugsweise ist die Gleitlagerbuchse 124 in die Buchse 126 und somit in das zweite Beschlagteils 120 eingepresst.

Ein Zahnrad 130 dient dem Antrieb der Drehbewegung des zweiten Beschlagteils 120 relativ zu dem ersten Beschlagteil 110 um die Drehachse A. Das Zahnrad 130 ist als ein außenverzahntes Zahnrad ausgebildet. Es steht mit dem ersten innenverzahnten Zahnkranz 112 und dem zweiten innenverzahnten Zahnkranz 122 in Zahneingriff. Das Zahnrad 130 und die Innenzahnkränze 112; 122 sind derart ausgebildet, dass das Zahnrad 130 innerhalb der Innenzahnkränze 112; 122 taumeln kann. Vorzugsweise weisen die beiden Zahnkränze zueinander eine unterschiedliche Zähnezahl auf, insbesondere eine Zähnezahldifferenz von eins. Das Zahnrad 130 hat vorzugsweise eine geringere Zähnezahl als jeder der beiden Zahnkränze 112; 122. Der Unterschied der Zähnezahlen zwischen dem Zahnrad 130 und einem der beiden Zahnkränze 112; 122 kann genau eins betragen. Im vorliegenden Ausführungsbeispiel weist der erste Zahnkranz 112 fünfzig Zähne, weist der zweite Zahnkranz 122 einundfünfzig Zähne und weist das Zahnrad 130 neunundvierzig Zähne auf.

Das Zahnrad 130 weist einen Wellenabschnitt 132 auf, der axial beidseitig über die Verzahnung des hinaussteht. Der Wellenabschnitt 132 ist zentrisch zu der Verzahnung des Zahnrads 130 und taumelt im angetriebenen Zustand um die Drehachse A.

Zum Antrieb der taumelden Abwälzbewegung des Zahnrads 130 in den Innenzahnkränzen 112; 122 und somit zum Antrieb der Drehbewegung des zweiten Beschlagteils 120 relativ zu dem ersten Beschlagteil 110 um die Drehachse A, ist genau ein Exzenter 160, nachfolgend auch als erster Exzenter 160 bezeichnet, zwischen dem Wellenabschnitt 132 und der Gleitlagerbuchse 114 des ersten Beschlagteils 110 angeordnet. Zudem ist genau ein weiterer Exzenter 180, nachfolgend auch als zweiter Exzenter 180 bezeichnet, zwischen dem Wellenabschnitt 132 und der Gleitlagerbuchse 124 des zweiten Beschlagteils 120 angeordnet. Die beiden Exzenter 160; 180 haben neben der antreibenden Funktion zudem jeweils die Funktion eines Radialspielausgleichs, wie nachfolgend näher beschrieben ist. Die beiden Exzenter 160; 180 entsprechen hinsichtlich Funktion und Aufbau jeweils einem aus der DE 44 36 101 A1 bekannten Exzenter und sind weitgehend spiegelsymmetrisch aufgebaut, weshalb nachfolgend nur der erste Exzenter 160 ausführlich beschrieben ist.

Ein erster Mitnehmer 162 ist drehbar in dem Wellenabschnitt 132 gelagert. Der erste Mitnehmer 162 ist vorzugsweise aus Kunststoff einstückig gefertigt. Der erste Mitnehmer 162 weist eine Nabe 163 auf, die mit ihrem Außenmantel in einem in Richtung des ersten Beschlagteils 110 weisenden Endbereich des Wellenabschnitts 132 drehbar gelagert ist. Mit der Nabe 163 ist ein den Wellenabschnitt 132 bereichsweise übergreifender und in radialem Abstand zu der Nabe 163 angeordneter Mitnehmerarm 164 verbunden. Der Mitnehmerarm 164 und die Nabe 163 gehen in eine den ersten Exzenter 160 radial übergreifende Abdeckscheibe 165 des Mitnehmers 162 über.

Auf dem Wellenabschnitt 132 sind zwei Keilsegmente 166 mit ihren nach radial innen weisenden Innenflächen abgestützt. Die Keilsegmente 166 weisen nach radial außen weisende Außenflächen auf, die mit der Innenfläche der Gleitlagerbuchse 114 in Berührung sind. Die Keilsegmente 166 sind jeweils annähernd in der gleichen axialen Ebene wie die Verzahnung des ersten Zahnkranzes 112 angeordnet.

Jedes der beiden Keilsegmente 166 weist zwei weitgehend senkrecht zur Umfangsrichtung stehende Stirnseiten auf. In Umfangsrichtung betrachtet, sind die beiden Keilsegmente 166 spiegelsymmetrisch zueinander. Jedes der beiden Keilsegmente 166 weist in radialer Richtung betrachtet eine schmale Stirnseite und eine breite Stirnseite auf. Die breiten Stirnseiten der Keilsegmente 166 sind durch eine Feder 168, vorliegend eine als Ringfeder ausgeführte Feder 168, voneinander weg vorgespannt.

Die Keilsegmente 166 bilden zusammen mit dem Wellenabschnitt 132 einen Exzenterabschnitt mit einer Exzentrizität e zur Drehachse A. Der Exzenterabschnitt ist Bestandteil des erster Exzenters 160 und drückt das Zahnrad 130 und den ersten Zahnkranz 112 in Zahneingriff miteinander. Durch die Feder 168 sind die beiden Keilsegmente 166 derart voneinander weg vorgespannt, dass aufgrund einer Keilwirkung das Zahnrad 130 und der erste Zahnkranz 112 spielfrei ineinandergreifen, so dass erste Exzenter 160 auch einen Radialspielausgleich zwischen dem ersten Zahnkranz 112 und dem Zahnrad 130 bewirkt.

Der Mitnehmerarm 164 greift mit geringfügigem Spiel zwischen die breiten Stirnseiten der Keilsegmente 166, so dass eine Drehung des Mitnehmers 162 nach einem geringfügigen Leerwinkel eine Drehung des ersten Exzenters 160 bewirkt.

Die Nabe 163 des Mitnehmers 162 weist in ihrem Zentrum eine Bohrung mit einem Keilwellenprofil auf, in welches ein komplementäres Keilwellenprofil einer in den Figuren nicht dargestellten Übertragungsstange eingreift. Die Übertragungsstange ist manuell oder mittels eines Elektromotors antreibbar. Eine Drehung der Übertragungsstange bewirkt eine Drehung und des ersten Mitnehmers 162 und wie nachfolgend noch eingehender beschrieben eines zweiten Mitnehmers 182. Zudem kann die Übertragungsstange einen zweiten Gelenkbeschlag des Fahrzeugsitzes synchron zum Gelenkbeschlag 100 antreiben.

Der zweite Mitnehmer 182 ist ebenfalls drehbar in dem Wellenabschnitt 132 gelagert. Der zweite Mitnehmer 182 weist eine Nabe 183 auf, die mit ihrem Außenmantel in einem in Richtung des zweiten Beschlagteils 120 weisenden Endbereich des Wellenabschnitts 132 drehbar gelagert ist. Mit der Nabe 183 ist ein Mitnehmerarm 184 verbunden. Mit der Nabe 183 ist ein den Wellenabschnitt 132 bereichsweise übergreifender und in radialem Abstand zu der Nabe 183 angeordneter Mitnehmerarm 184 verbunden. Der Mitnehmerarm 184 und die Nabe 183 gehen in eine den ersten Exzenter 180 radial übergreifende Abdeckscheibe 185 des Mitnehmers 182 über.

Auf dem Wellenabschnitt 132 sind zwei Keilsegmente 186 des zweiten Exzenters 180 mit ihren nach radial innen weisenden Innenflächen abgestützt. Die Keilsegmente 186 weisen nach radial außen weisende Außenflächen auf, die mit der Innenfläche der Gleitlagerbuchse 124 des zweiten Beschlagteils 120 in Berührung sind. Die Keilsegmente 186 sind jeweils annähernd in der gleichen axialen Ebene wie die Verzahnung des zweiten Zahnkranzes 122 angeordnet.

Die Keilsegmente 186 sind durch eine Feder 188 voneinander weg vorgespannt. Die Keilsegmente 186 bilden zusammen mit dem Wellenabschnitt 132 einen Exzenterabschnitt mit einer Exzentrizität e zur Drehachse A, die in gleicher Richtung orientiert ist wie die Exzentrizität e des ersten Exzenters 160. Der Exzenterabschnitt ist Bestandteil des zweiten Exzenters 180 und drückt den zweiten Zahnkranz 122 und das Zahnrad 130 in Zahneingriff miteinander. Durch die Feder 188 sind die beiden Keilsegmente 186 derart voneinander weg vorgespannt, dass aufgrund einer Keilwirkung der zweite Zahnkranz 122 und das Zahnrad 130 spielfrei ineinandergreifen, so dass der zweite Exzenter 180 auch einen Radialspielausgleich zwischen dem zweiten Zahnkranz 122 und dem Zahnrad 130 bewirkt.

Der Mitnehmerarm 184 greift mit geringfügigem Spiel zwischen die breiten Stirnseiten der Keilsegmente 186, so dass eine Drehung des zweiten Mitnehmers 182 nach einem geringfügigen Leerwinkel eine Drehung des Exzenters 180 bewirkt.

Die Nabe 183 des Mitnehmers 182 weist in ihrem Zentrum eine Bohrung mit einem Keilwellenprofil auf, in welches das komplementäre Keilwellenprofil der Übertragungsstange eingreift. Eine Drehung der Übertragungsstange bewirkt eine somit auch eine Drehung des zweiten Mitnehmers 182.

Die beiden Beschlagteile 110; 120 sind mittels eines Umklammerungsrings 190 axial zueinander fixiert, wobei die beiden Beschlagteile 110; 120 in radialer Richtung begrenzt beweglich zueinander sind. Die Funktion eines Umklammerungsrings ist an sich bekannt, beispielsweise aus der DE 10 2010 013 092 A1.

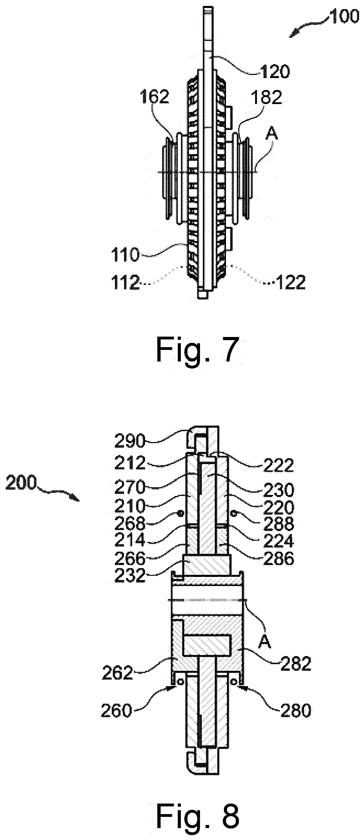

Die Figur 8 zeigt einen Schnitt durch einen Gelenkbeschlag 200 gemäß eines zweiten Ausführungsbeispiels, das hinsichtlich Aufbau und Funktion dem zuvor beschriebenen Gelenkbeschlag 100 des ersten Ausführungsbeispiels entspricht, sofern nachfolgend nicht abweichend beschrieben.

Der Gelenkbeschlag 200 weist ein erstes Beschlagteil 210 und ein zweites Beschlagteil 220 auf. Das zweite Beschlagteil 220 ist um eine Drehachse A relativ zu dem erstes Beschlagteil 210 drehbar.

Das erste Beschlagteil 210 weist einen ersten Zahnkranz 212 auf. Die Drehachse A fällt mit einer zentralen Achse des ersten Zahnkranzes 212 zusammen. In das erste Beschlagteil 210 ist zentral eine Gleitlagerbuchse 214 eingepresst. Das zweite Beschlagteil 220 weist einen zweiten Zahnkranz 222 auf. Die Drehachse A fällt mit einer zentralen Achse des zweiten Zahnkranzes 222 zusammen. In das zweite Beschlagteil 220 ist zentral eine Gleitlagerbuchse 224 eingepresst.

Ein Zahnrad 230 dient dem Antrieb der Drehbewegung des zweiten Beschlagteils 220 relativ zu dem ersten Beschlagteil 210 um die Drehachse A. Das Zahnrad 230 steht mit dem ersten innenverzahnten Zahnkranz 212 und dem zweiten innenverzahnten Zahnkranz 222 in Zahneingriff. Das Zahnrad 230 kann innerhalb der Innenzahnkränze 212; 222 taumeln.

Das Zahnrad 230 weist einen Wellenabschnitt 232 auf, der axial beidseitig über die Verzahnung des hinaussteht. Der Wellenabschnitt 232 ist zentrisch zu der Verzahnung des Zahnrads 230 und taumelt im angetriebenen Zustand um die Drehachse A.

Zum Antrieb der taumelden Abwälzbewegung des Zahnrads 230 in den Innenzahnkränzen 212; 222 und somit zum Antrieb der Drehbewegung des zweiten Beschlagteils 220 relativ zu dem ersten Beschlagteil 210 um die Drehachse A, ist genau ein Exzenter 260, nachfolgend auch als erster Exzenter 260 bezeichnet, zwischen dem Wellenabschnitt 232 und der Gleitlagerbuchse 214 des ersten Beschlagteils 210 angeordnet. Zudem ist genau ein weiterer Exzenter 280, nachfolgend auch als zweiter Exzenter 280 bezeichnet, zwischen dem Wellenabschnitt 232 und der Gleitlagerbuchse 224 des zweiten Beschlagteils 220 angeordnet. Die beiden Exzenter 260; 280 haben neben der antreibenden Funktion zudem jeweils die Funktion eines Radialspielausgleichs, wie zuvor beschrieben.

Ein erster Mitnehmer 262 ist drehbar in dem Wellenabschnitt 232 gelagert. Der erste Mitnehmer 262 weist eine Nabe 263 auf, die in dem Wellenabschnitt 232 drehbar gelagert ist. Mit der Nabe 263 ist ein Mitnehmerarm verbunden.

Auf dem Wellenabschnitt 232 sind zwei Keilsegmente 266 mit ihren nach radial innen weisenden Innenflächen abgestützt. Die Keilsegmente 266 weisen nach radial außen weisende Außenflächen auf, die mit der Innenfläche der Gleitlagerbuchse 214 in Berührung sind. Jedes der beiden Keilsegmente 266 weist zwei weitgehend senkrecht zur Umfangsrichtung stehende Stirnseiten auf. In Umfangsrichtung betrachtet, sind die beiden Keilsegmente 266 spiegelsymmetrisch zueinander. Die Keilsegmente 266 sind durch eine Feder 268 voneinander weg vorgespannt.

Die Keilsegmente 266 bilden zusammen mit dem Wellenabschnitt 232 einen Exzenterabschnitt mit einer Exzentrizität e zur Drehachse A. Der Exzenterabschnitt ist Bestandteil des ersten Exzenters 260 und drückt das Zahnrad 230 und den ersten Zahnkranz 212 in Zahneingriff miteinander. Durch die Feder 268 sind die beiden Keilsegmente 266 derart voneinander weg vorgespannt, dass aufgrund einer Keilwirkung das Zahnrad 230 und der erste Zahnkranz 212 spielfrei ineinandergreifen, so dass erste Exzenter 260 auch einen Radialspielausgleich zwischen dem ersten Zahnkranz 212 und dem Zahnrad 230 bewirkt.

Zusätzlich zu dem ersten Exzenter 260 bewirkt eine in radialer Richtung elastisch vorgespannte Scheibe 270 einen Radialspielausgleich zwischen dem ersten Zahnkranz 212 und dem Zahnrad 230. Die Scheibe 270 kann radial innen einen nachgiebigeren Werkstoff aufweist als radial außen. Ein radial äußerer Bereich der Scheibe 270 kann aus einem Metall gefertigt sein. Ein radial innerer Bereich der Scheibe 270 kann aus einem Kunststoff gefertigt sein.

Die Scheibe 270 weist radial außen eine Verzahnung auf. Die Zähnezahl der Verzahnung der Scheibe 270 ist gleich der Zähnezahl des ersten Zahnkranzes 212, mit dem die Scheibe 270 in Zahneigriff ist. Die Verzahnung der Scheibe 270 kann im Zahneingriff mit dem ersten Zahnkranz 212 sein. Ein radial innerer Bereich der Scheibe 270 ist auf einer axialen Stufe des Zahnrads 230 abgestützt. Die Verzahnung der Scheibe 270 steht radial geringfügig über die Verzahnung des Zahnrads 230 über. Dadurch ist die Verzahnung der Scheibe 270 radial vorgespannt, wodurch die Scheibe 270 einen Radialspielausgleich zwischen dem ersten Zahnkranz 212 und dem Zahnrad 230 bewirkt.

Der Mitnehmerarm greift mit geringfügigem Spiel zwischen die breiten Stirnseiten der Keilsegmente 266, so dass eine Drehung des Mitnehmers 262 nach einem geringfügigen Leerwinkel eine Drehung des ersten Exzenters 260 bewirkt.

Die Nabe 263 des ersten Mitnehmers 262 weist in ihrem Zentrum eine Bohrung mit einem Keilwellenprofil auf, in welches ein komplementäres Keilwellenprofil einer in den Figuren nicht dargestellten Übertragungsstange eingreift. Eine Drehung der Übertragungsstange bewirkt eine Drehung und des ersten Mitnehmers 262 und wie nachfolgend noch eingehender beschrieben eines zweiten Mitnehmers 282.

Der zweite Mitnehmer 282 ist ebenfalls drehbar in dem Wellenabschnitt 232 gelagert. Der zweite Mitnehmer 282 weist eine Nabe 283 auf, die drehbar in dem Wellenabschnitt 232 gelagert ist. Mit der Nabe 283 ist ein Mitnehmerarm verbunden.

Auf dem Wellenabschnitt 232 sind zwei Keilsegmente 286 des zweiten Exzenters 280 mit ihren nach radial innen weisenden Innenflächen abgestützt. Die Keilsegmente 286 weisen nach radial außen weisende Außenflächen auf, die mit der Innenfläche der Gleitlagerbuchse 224 des zweiten Beschlagteils 220 in Berührung sind.

Die Keilsegmente 286 sind durch eine Feder 288 voneinander weg vorgespannt. Die Keilsegmente 286 bilden zusammen mit dem Wellenabschnitt 232 einen Exzenterabschnitt mit einer Exzentrizität e zur Drehachse A, die in gleicher Richtung orientiert ist wie die Exzentrizität e des ersten Exzenters 260. Der Exzenterabschnitt ist Bestandteil des zweiten Exzenters 280 und drückt den zweiten Zahnkranz 222 und das Zahnrad 230 in Zahneingriff miteinander. Durch die Feder 288 sind die beiden Keilsegmente 286 derart voneinander weg vorgespannt, dass aufgrund einer Keilwirkung der zweite Zahnkranz 222 und das Zahnrad 230 spielfrei ineinandergreifen, so dass der zweite Exzenter 280 auch einen Radialspielausgleich zwischen dem zweiten Zahnkranz 222 und dem Zahnrad 230 bewirkt.

Der Mitnehmerarm greift mit geringfügigem Spiel zwischen die breiten Stirnseiten der Keilsegmente 286, so dass eine Drehung des zweiten Mitnehmers 282 nach einem geringfügigen Leerwinkel eine Drehung des zweiten Exzenters 280 bewirkt.

Die Nabe 283 des Mitnehmers 282 weist in ihrem Zentrum eine Bohrung mit einem Keilwellenprofil auf, in welches das komplementäre Keilwellenprofil der Übertragungsstange eingreift. Eine Drehung der Übertragungsstange bewirkt eine somit auch eine Drehung des zweiten Mitnehmers 282

Die beiden Beschlagteile 210; 220 sind mittels eines Umklammerungsrings 290 axial zueinander fixiert, wobei die beiden Beschlagteile 210; 220 in radialer Richtung begrenzt beweglich zueinander sind.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 100: Gelenkbeschlag
- 110: erstes Beschlagteil
- 112: erster Zahnkranz
- 114: Gleitlagerbuchse
- 120: zweites Beschlagteil
- 122: zweiter Zahnkranz
- 124: Gleitlagerbuchse
- 126: Buchse
- 130: Zahnrad
- 132: Wellenabschnitt
- 160: Exzenter
- 162: Mitnehmer
- 163: Nabe
- 164: Mitnehmerarm
- 165: Abdeckscheibe
- 166: Keilsegment
- 168: Feder
- 180: Exzenter
- 182: Mitnehmer
- 183: Nabe
- 184: Mitnehmerarm
- 185: Abdeckscheibe
- 186: Keilsegment
- 188: Feder
- 190: Umklammerungsring

- 200: Gelenkbeschlag
- 210: erstes Beschlagteil
- 212: erster Zahnkranz
- 214: Gleitlagerbuchse
- 220: zweites Beschlagteil
- 222: zweiter Zahnkranz
- 224: Gleitlagerbuchse
- 226: Buchse
- 230: Zahnrad
- 232: Wellenabschnitt
- 260: Exzenter
- 262: Mitnehmer
- 263: Nabe
- 266: Keilsegment
- 268: Feder
- 270: Scheibe
- 280: Exzenter
- 282: Mitnehmer
- 283: Nabe
- 286: Keilsegment
- 288: Feder
- 290: Umklammerungsring

- A: Drehachse
- e: Exzentrizität

## Patentansprüche

1. Gelenkbeschlag (100; 200) für einen Fahrzeugsitz (1), insbesondere Kraftfahrzeugsitz, aufweisend ein erstes Beschlagteil (110; 210) mit einem ersten Zahnkranz (112; 212), ein zweites Beschlagteil (120; 220) mit einem zweiten Zahnkranz (122; 222), das zweite Beschlagteil (120; 220) um eine Drehachse (A) relativ zu dem ersten Zahnkranz (112; 212) drehbar, ein in dem ersten Zahnkranz (112; 212) und in dem zweiten Zahnkranz (122; 222) abwälzendes Zahnrad (130; 230) zur Erzeugung einer Drehbewegung zwischen dem ersten Zahnkranz (112; 212) und dem zweiten Zahnkranz (122; 222), einen zwischen dem ersten Beschlagteil (110; 210) und dem Zahnrad (130; 230) angeordneten Exzenter (160; 260) zum Antreiben einer Abwälzbewegung des Zahnrads (130; 230) in dem ersten Zahnkranz (112; 212), der Exzenter (160; 260) aufweisend zwei Keilsegmente (166; 266) und eine die Keilsegmente (166; 266) auseinanderdrückende Feder (168; 268),
wobei
zwischen dem zweiten Beschlagteil (120; 220) und dem Zahnrad (130; 230) ein weiterer Exzenter (180; 280), insbesondere zur Spielfreistellung zwischen dem Zahnrad (130; 230) und dem zweiten Zahnkranz (122; 222), angeordnet ist, der weitere Exzenter (180; 280) aufweisend zwei Keilsegmente (186; 286), **gekennzeichnet durch** eine in radialer Richtung elastisch vorgespannte Scheibe (270) zur Spielfreistellung zwischen dem Zahnrad (230) und einem der beiden Zahnkränze (212; 222).

2. Gelenkbeschlag (100; 200) nach Anspruch 1, **dadurch gekennzeichnet, dass** die beiden Zahnkränze (112; 212;122; 222) eine zueinander unterschiedliche Zähnezahl aufweisen, insbesondere der Unterschied der Zähnezahlen eins beträgt.

3. Gelenkbeschlag (100; 200) nach Anspruch 1 oder 2, **dadurch gekennzeichnet, dass** das Zahnrad (130; 230) eine geringere Zähnezahl aufweist als jeder der beiden Zahnkränze (112; 212; 122; 222).

4. Gelenkbeschlag (100; 200) nach einem der vorhergehenden Ansprüche, **dadurch gekennzeichnet, dass** beide Exzenter (160; 260; 180; 280) eine gleich orientierte Exzentrizität (e) zur Drehachse (A) aufweisen.

5. Gelenkbeschlag (100; 200) nach einem der vorhergehenden Ansprüche, **dadurch gekennzeichnet, dass** jeweils zwei Keilsegmente (166; 186; 266; 286) axial benachbart zueinander angeordnet sind.

6. Gelenkbeschlag (100; 200) nach einem der vorhergehenden Ansprüche, **dadurch gekennzeichnet, dass** die beiden Exzenter (160; 260; 180; 280) axial benachbart zueinander angeordnet sind.

7. Gelenkbeschlag (100; 200) nach einem der vorhergehenden Ansprüche, **dadurch gekennzeichnet, dass** jeweils zwei Keilsegmente (166; 186; 266; 286) spiegelsymmetrisch zu einer senkrecht zur Drehachse (A) verlaufenden Symmetrieebene angeordnet sind.

8. Gelenkbeschlag (100; 200) nach einem der vorhergehenden Ansprüche, **dadurch gekennzeichnet, dass** die beiden Exzenter (160; 260; 180; 280) spiegelsymmetrisch zu einer senkrecht zur Drehachse (A) verlaufenden Symmetrieebene angeordnet sind.

9. Gelenkbeschlag (100; 200) nach einem der vorhergehenden Ansprüche, **dadurch gekennzeichnet, dass** der weitere Exzenter (180; 280) eine dessen Keilsegmente (186; 286) auseinanderdrückende Feder (188; 288) aufweist.

10. Gelenkbeschlag (100; 200) nach einem der vorhergehenden Ansprüche, **dadurch gekennzeichnet, dass** der weitere Exzenter (180; 280) einen dessen Keilsegmente (166; 266) antreibenden Mitnehmer (162; 262) aufweist.

11. Gelenkbeschlag (100; 200) nach einem der vorhergehenden Ansprüche, **dadurch gekennzeichnet, dass** die beiden Beschlagteile (110; 210; 120; 220) mittels eines Umklammerungsrings (190; 290) axial zueinander fixiert sind, wobei die beiden Beschlagteile (110; 210; 120; 220) in radialer Richtung begrenzt beweglich zueinander sind.

12. Gelenkbeschlag (100; 200) nach einem der vorhergehenden Ansprüche, **dadurch gekennzeichnet, dass** wenigstens einer der Exzenter (160; 260; 180; 280) in einer in einem der beiden Beschlagteile (110; 210; 120; 220) angeordneten, insbesondere eingepressten, Gleitlagerbuchse (114; 124; 214; 224) gelagert ist.

13. Fahrzeugsitz (1) mit wenigstens einem Gelenkbeschlag (100; 200) nach einem der Ansprüche 1 bis 12.

14. Fahrzeugsitz (1) nach Anspruch 13, aufweisend ein Sitzteil (3) und eine Rückenlehne (5), die mittels des wenigstens einen Gelenkbeschlags (100; 200) um eine Drehachse (A) einstellbar an dem Sitzteil (3) angelenkt ist.

## Claims

1. Joint fitting (100; 200) for a vehicle seat (1), in particular for a motor vehicle seat, having a first fitting part (110; 210) with a first sprocket (112; 212), a second fitting part (120; 220) with a second sprocket (122; 222), the second fitting part (120; 220) being rotatable about an axis of rotation (A) relative to the first sprocket (112; 212), a gear (130; 230), which rolls in the first sprocket (112; 212) and in the second sprocket (122; 222), for generating a rotary movement between the first sprocket (112; 212) and the second sprocket (122; 222), an eccentric (160; 260), which is arranged between the first fitting part (110; 210) and the gear (130; 230), for driving a rolling movement of the gear (130; 230) in the first sprocket (112; 212), the eccentric (160; 260) having two wedge segments (166; 266) and a spring (168; 268) that pushes the wedge segments (166; 266) apart,
wherein
a further eccentric (180; 280), in particular for eliminating backlash between the gear (130; 230) and the second sprocket (122; 222), is arranged between the second fitting part (120; 220) and the gear (130; 230), the further eccentric (180; 280) having two wedge segments (186; 286),
**characterized by** a disc (270), elastically preloaded in a radial direction, for eliminating backlash between the gear (230) and one of the two sprockets (212; 222).

2. Joint fitting (100; 200) according to Claim 1, **characterized in that** the two sprockets (112; 212;122; 222) have a different number of teeth from one another, in particular the difference in the numbers of teeth is one.

3. Joint fitting (100; 200) according to Claim 1 or 2, **characterized in that** the gear (130; 230) has a lower number of teeth than either of the two sprockets (112; 212;122; 222).

4. Joint fitting (100; 200) according to one of the preceding claims, **characterized in that** the two eccentrics (160; 260; 180; 280) have an identically oriented eccentricity (e) with respect to the axis of rotation (A).

5. Joint fitting (100; 200) according to one of the preceding claims, **characterized in that** in each case two wedge segments (166; 186; 266; 286) are arranged axially adjacent to one another.

6. Joint fitting (100; 200) according to one of the preceding claims, **characterized in that** the two eccentrics (160; 260; 180; 280) are arranged axially adjacent to one another.

7. Joint fitting (100; 200) according to one of the preceding claims, **characterized in that** in each case two wedge segments (166; 186; 266; 286) are arranged mirrorsymmetrically to a plane of symmetry extending perpendicularly to the axis of rotation (A).

8. Joint fitting (100; 200) according to one of the preceding claims, **characterized in that** the two eccentrics (160; 260; 180; 280) are arranged mirrorsymmetrically to a plane of symmetry extending perpendicularly to the axis of rotation (A).

9. Joint fitting (100; 200) according to one of the preceding claims, **characterized in that** the further eccentric (180; 280) has a spring (188; 288) that pushes its wedge segments (186; 286) apart.

10. Joint fitting (100; 200) according to one of the preceding claims, **characterized in that** the further eccentric (180; 280) has a driver (162; 262) that drives its wedge segments (166; 266).

11. Joint fitting (100; 200) according to one of the preceding claims, **characterized in that** the two fitting parts (110; 210; 120; 220) are fixed axially with respect to one another by a clasp ring (190; 290), wherein the two fitting parts (110; 210; 120; 220) are movable to a limited extent in a radial direction with respect to one another.

12. Joint fitting (100; 200) according to one of the preceding claims, **characterized in that** at least one of the eccentrics (160; 260; 180; 280) is mounted in a plain bearing bush (114; 124; 214; 224) arranged in, in particular pressed into, one of the two fitting parts (110; 210; 120; 220).

13. Vehicle seat (1) having at least one joint fitting (100; 200) according to one of Claims 1 to 12.

14. Vehicle seat (1) according to Claim 13, having a sitting part (3) and a backrest (5), which is articulated on the sitting part (3) so as to be settable about an axis of rotation (A) by the at least one joint fitting (100; 200).

## Revendications

1. Ferrure d'articulation (100 ; 200) pour un siège de véhicule (1), en particulier un siège de véhicule automobile, présentant une première partie (110 ; 210) de ferrure avec une première couronne dentée (112 ; 212), une deuxième partie de ferrure (120 ; 220) avec une deuxième couronne dentée (122 ; 222), la deuxième partie de ferrure (120 ; 220) étant apte à tourner autour d'un axe de rotation (A) par rapport à la première couronne dentée (112 ; 212), une roue dentée (130 ; 230) tournant dans la première couronne dentée (112 ; 212) et dans la deuxième couronne dentée (122 ; 222) pour produire un mouvement de rotation entre la première couronne dentée (112 ; 212) et la deuxième couronne dentée (122 ; 222), un excentrique (160 ; 260) agencé entre la première partie de ferrure (110 ; 210) et la roue dentée (130 ; 230) pour entraîner un mouvement de rotation de la roue dentée (130 ; 230) dans la première couronne dentée (112 ; 212), l'excentrique (160 ; 260) présentant deux segments formant cale (166 ; 266) et un ressort (168 ; 268) écartant les segments formant cale (166 ; 266),
dans laquelle
un autre excentrique (180 ; 280) est agencé entre la deuxième partie de ferrure (120 ; 220) et la roue dentée (130 ; 230), en particulier pour la libération d'un jeu entre la roue dentée (130 ; 230) et la deuxième couronne (122 ; 222), l'autre excentrique (180 ; 280) présentant deux segments formant cale (186 ; 286), **caractérisé par** une rondelle (270) précontrainte élastiquement dans la direction radiale pour la libération d'un jeu entre la roue dentée (230) et l'une des deux couronnes dentées (212 ; 222).

2. Ferrure d'articulation (100 ; 200) selon la revendication 1, **caractérisée en ce que** les deux couronnes dentées (112 ; 212 ; 122 ; 222) présentent un nombre de dents différent l'une de l'autre, en particulier la différence des nombres de dents est de un.

3. Ferrure d'articulation (100 ; 200) selon la revendication 1 ou la revendication 2, **caractérisée en ce que** la roue dentée (130 ; 230) présente un nombre de dents inférieur à celui de chacune des deux couronnes dentées (112 ; 212 ; 122 ; 222).

4. Ferrure d'articulation (100 ; 200) selon l'une des revendications précédentes, **caractérisée en ce que** les deux excentriques (160 ; 260 ; 180 ; 280) présentent une excentricité (e) orientée de la même manière par rapport à l'axe de rotation (A).

5. Ferrure d'articulation (100 ; 200) selon l'une des revendications précédentes, **caractérisée en ce que** deux segments de cale (166 ; 186 ; 266 ; 286) sont respectivement disposés axialement de manière adjacente l'un à l'autre.

6. Ferrure d'articulation (100 ; 200) selon l'une des revendications précédentes, **caractérisée en ce que** les deux excentriques (160 ; 260 ; 180 ; 280) sont disposés axialement de manière adjacente l'un à l'autre.

7. Ferrure d'articulation (100 ; 200) selon l'une des revendications précédentes, **caractérisée en ce que** deux segments formant cale (166 ; 186 ; 266 ; 286) sont respectivement disposés de manière symétrique par rapport à un plan de symétrie s'étendant perpendiculairement à l'axe de rotation (A).

8. Ferrure d'articulation (100 ; 200) selon l'une des revendications précédentes, **caractérisée en ce que** les deux excentriques (160 ; 260 ; 180 ; 280) sont disposés de manière symétrique par rapport à un plan de symétrie s'étendant perpendiculairement à l'axe de rotation (A).

9. Ferrure d'articulation (100 ; 200) selon l'une des revendications précédentes, **caractérisée en ce que** l'autre excentrique (180 ; 280) présente un ressort (188 ; 288) écartant ses segments formant cale (186 ; 286).

10. Ferrure d'articulation (100 ; 200) selon l'une des revendications précédentes, **caractérisée en ce que** l'autre excentrique (180 ; 280) présente un entraîneur (162 ; 262) entraînant ses segments formant cale (166 ; 266) .

11. Ferrure d'articulation (100 ; 200) selon l'une des revendications précédentes, **caractérisée en ce que** les deux parties de la ferrure (110 ; 210 ; 120 ; 220) sont fixées axialement l'une par rapport à l'autre au moyen d'une bague de serrage (190 ; 290), les deux parties de la ferrure (110 ; 210 ; 120 ; 220) ayant une mobilité limitée l'une par rapport à l'autre dans la direction radiale.

12. Ferrure d'articulation (100 ; 200) selon l'une des revendications précédentes, **caractérisée en ce qu'**au moins l'un des excentriques (160 ; 260 ; 180 ; 280) est logé dans un coussinet (114 ; 124 ; 214 ; 224) disposé, en particulier enfoncé, dans l'une des deux parties de ferrure (110 ; 210 ; 120 ; 220).

13. Siège de véhicule (1), comprenant au moins une armature d'articulation (100 ; 200) selon l'une des revendications 1 à 12.

14. Siège de véhicule (1) selon la revendication 13, présentant une partie d'assise (3) et un dossier (5) qui est articulé sur la partie d'assise (3) de manière réglable autour d'un axe de rotation (A) au moyen de ladite au moins une ferrure d'articulation (100 ; 200).
